# EUROPÄISCHE PATENTSCHRIFT

(11) **EP 1 995 425 B1**
(45) Veröffentlichungstag und Bekanntmachung des Hinweises auf die Patenterteilung: **31.08.2011**
(21) Anmeldenummer: 08009353.7
(22) Anmeldetag: 21.05.2008
(51) Int. Cl.: F02B 37/013

(54) **Integriertes Auflademodul**
Integrated charging module
Module de chargement intégré

(30) Priorität: 24.05.2007 DE 102007024631
(43) Veröffentlichungstag der Anmeldung: 26.11.2008
(73) Patentinhaber: Behr GmbH & Co. KG, 70469 Stuttgart (DE)
(72) Erfinder: Wegner, Jürgen, 73054 Eislingen (DE); Huster, Joachim, 88048 Berg (DE); Ruetz, Georg, 88090 Immenstaad (DE)
(74) Vertreter: Grauel, Andreas

(56) Entgegenhaltungen:
- EP-A- 1 057 978
- DE-A1- 3 514 670
- DE-A1- 10 118 951
- DE-A1- 10 230 934
- DE-A1- 19 822 874
- DE-A1- 19 853 455
- DE-A1- 19 948 220
- FR-A1- 2 856 746
- GB-A- 1 438 172
- US-A- 1 310 682
- US-A- 4 196 593
- US-A- 4 344 289
- US-A- 5 697 217
- US-A1- 2002 056 444
- US-A1- 2004 118 389

## Beschreibung

Die vorliegende Erfindung betrifft ein integriertes Auflademodul, wie es beispielsweise bei Kraftfahrzeugen zum Einsatz kommt.

Aus dem Stand der Technik ist es bekannt, die Leistung eines Verbrennungsmotors zu steigern, indem zusätzlich ein Turbolader eingesetzt wird. Die erwärmte Ladeluft des Turboladers muss dabei vor dem Eintritt in die Brennkammer des Motor gekühlt werden. Dies geschieht in der Regel mit Hilfe eines Ladeluftkühlers. Bei einer mehrstufigen Verdichtung der Ladeluft ist, wie beispielsweise in US4,344,289, zwischen einem Niederdruck-Verdichter und einem Hochdruck-Verdichter ein Zwischenkühler und nach dem Hochdruck-Verdichter noch ein Hochdruckladeluftkühler angeordnet.

Da die Ein- und Auslässe der einzelnen Verdichter nach dem Stand der Technik recht weit voneinander beabstandet sind, müssen bisher für den zwischenliegend angeordneten Zwischenkühler aufwändige Verbindungselemente mit einem jeweils langen Leitungsweg verwendet werden. Dies bedingt einen Druckverlust für die Ladeluft, der sich im Wesentlichen aus einem strömungs-technisch nicht optimalen Verlauf und der großen Länge der Leitungswege ergibt. Der räumliche Verlauf der Leitungen wird in erster Linie von den Hauptkomponenten im Motorraum bestimmt und orientiert sich an den verbliebenen Freiräumen. Entsprechendes gilt für die Verbindungselemente eines Hochdruckladeluftkühlers.

US 2004/0118389 A1 offenbart ein Turboladermodul mit einem Niederdruckverdichter und einem Hochdruckverdichter, bei dem ein Auslass des Niederdruckverdichters komprimierte Luft einem Wärmetauscher über einen internen Pfad zuleitet, der radial zum Niederdruckverdichter orientiert ist. Der Wärmetauscher ist in fluidkommunizierender Verbindung mit einem axial zum Hochdruckverdichter orientierten Einlass. Nach dem Hochdruckverdichter wird die komprimierte Luft einem Motorkrümmer zugeleitet. Dadurch wir eine effektive Kühlung mit verringertem Platzbedarf erreicht.

GB 1438172 zeigt in Fig. 3 und Fig. 1 eine zweistufe Lade- und Kühlanordnung für eine Verbrennungskraftmaschine, bei welcher die Längsachsen der Kühler senkrecht zu einer Drehachse der Ladeeinrichtung angeordnet sind, um eine raumsparende Anordnung zu realisieren. Die Turbine der Anordnung wird von Abgas direkt aus einem Abgaskrümmer bespeist, das anschließend in die Atmosphäre abgegeben wird.

Aus FR 2856746 ist eine lediglich für die Abgasrückführkühlung einsetzbare Kühlanordnung bekannt, bei welcher ein Gehäuse eines Ladeluftkühlers und ein Gehäuse eines Abgasrückführkühlers über eine gemeinsame Kühlmittelzuführung als auch eine zur Brennkraftmaschine führende gemeinsame Abgas- und Ladeluftführung verbunden sind.

Im Sinne einer optimalen Ladeluftströmungsführung wird angestrebt, dass die Verbindungselemente zwischen einem Kühler und einem Verdichter jeweils möglichst kurz ausgebildet sind und bevorzugt einen im Wesentlichen linearen Verlauf ihrer Längsachse aufweisen, Dadurch kann der Druckabfall der Ladeluftströmung verringert und der Wirkungsgrad des Auflademoduls erhöht werden.

Die vorliegende Erfindung stellt sich die Aufgabe, ein verbessertes Auflademodul zur Verfügung zu stellen.

Diese Aufgabe wird erfindungsgemäß durch ein integriertes Auflademodul gemäß Anspruch 1 gelöst.

Ein erfindungsgemäßes integriertes Auflademodul, welches insbesondere in Kraftfahrzeugen eingesetzt werden kann, umfasst eine Niederdruckladeeinrichtung mit einem Niederdruckverdichtergehäuse, eine Hochdruckladeeinrichtung mit einem Hochdruckverdichtergehäuse, eine Turbine und eine Kühleranordnung, wobei die Niederdruckladeeinrichtung, die Hochdruckladeeinrichtung, die Turbine und die Kühleranordnung eine bauliche Einheit bilden.

Die Ladeluft muss dadurch nur einen kurzen Weg in dem integrierten Auflademodul zurücklegen. Somit wird der Druckverlust verringert.

Vorteilhafterweise verringert sich der erforderliche Einbauraum für die Druckladeeinrichtungen und die Kühleranordnung aufgrund der kompakten Anordnung des erfindungsgemäßen integrierten Auflademoduls und der Druckladeeinrichtungen gegenüber einer Anordnung gemäß dem Stand der Technik.

Die Druckladeeinrichtungen können jeweils direkt oder über ein Verbindungsteil mit den zugehörigen Kühlern der Kühleranordnung verbunden sein. Entsprechend ist auch die Turbine direkt oder über ein Verbindungsteil mit dem Abgaskühler verbunden.

Eine direkte Verbindung kann einen Flansch an mindestens einem Druckverdichtergehäuse umfassen, wobei der Querschnitt des Flansches von komprimierter Luft und mindestens einem Kühlmittelstrom durchströmt wird. Ein entsprechender Flansch an einem Kühler der Kühleranordnung kann mit dem Flansch vom Druckverdichtergehäuse vorzugsweise verschraubt, verrastet, verklebt und / oder verschweißt werden, es sind aber auch weitere übliche Befestigungsmittel nach dem Stand der Technik einsetzbar.

Bei einer Verbindung mit Hilfe eines Verbindungsteils ist diese zwischen einem Auslass bzw. Einlass einer Druckladeeinrichtung und einem Einlass bzw. Auslass des Kühlers der Kühleranordnung als ein Verbindungsteil ausgebildet, wobei eine erste Seite des Verbindungsteils im Querschnitt im Wesentlichen dem Einlass bzw. Auslass einer Druckladeeinrichtung entspricht, und eine zweite Seite des Verbindungsteils im Querschnitt im Wesentlichen dem Einlass bzw. Auslass des Kühlers entspricht. Der Querschnitt der ersten Seite und der Querschnitt der zweiten Seite des Verbindungsteils sind in der Regel unterschiedlich. Der zweite Querschnitt weist die Gestalt eines Einlass für den Kühler auf, welcher bevorzugt rechteckförmig oder quadratisch ist.

Ein weiterer Vorteil eines erfindungsgemäßen integrierten Auflademoduls kann darin bestehen, dass dieses aufgrund der mittelbaren Verbindungen an den Schnittstellen zu den Drucktadeeinrichtungen und zum Abgaskühler vorteilhafterweise leicht ausgewechselt oder für Reparaturen aus- und eingebaut werden kann.

Ein Strömungskanal in der Kühleinrichtung weist eine Längsrichtung auf, die bevorzugt mit der Hauptströmungsrichtung der durchtretenden Luft identisch ist. Der Strömungskanal ist vorzugsweise in Gestalt eines im Wesentlichen kreisrunden Querschnitts ausgebildet, es sind aber auch davon" abweichende Querschnittsformen möglich. Die Längsachse des Strömungskanals kann gerade oder gekrümmt verlaufen.

Die Kühleranordnung eines erfindungsgemäßen integrierten Auflademoduls umfasst einen Zwischenkühler, einen Hochdruckladeluftkühler und einen Abgaskühler.

Die Niederladedruckeinrichtung und die Hochdruckladeeinrichtung eines erfindungsgemäßen integrierten Auflademoduls weisen einen axialen Einlass und einen radialen Auslass auf. Dies ermöglicht zum einen eine platzsparende Bauweise der Komponenten und des gesamten Auflademoduls zum anderen sorgt der vorzugsweise radiale Auslass der komprimierten Ladeluft für einen möglichst geringen Druckabfall.

In einem erfindungsgemäßen integrierten Auflademodul weisen die Niederladedruckeinrichtung, die Hochdruckladeeinrichtung und die Turbine eine gemeinsame Drehachse, insbesondere eine gemeinsame Welle, auf. Dadurch kann der Zwischenkühler vorteilhaft im Bereich des Motors zwischen den Druckladeeinrichtungen mit entsprechend kurzen Verbindungsteilen angeordnet werden.

Ein erfindungsgemäßes integriertes Auflademodul umfasst eine Kühlmittelplatte, die eine Kühlmittelführung für wenigstens einen, bevorzugt beide Kühler der Kühleranordnung aufweist und an der beide Kühler der Kühleranordnung befestigbar sind. Hierdurch können vorteilhaft die beiden Funktionen der Befestigung des bzw. der Kühler und der Kühlmittelführung in einem Bauteil vereint und so ein besonders kompaktes Auflademodul realisiert werden.

In einem erfindungsgemäßen integrierten Auflademodul verläuft die Ladeluftströmung vorzugsweise im Wesentlichen abschnittsweise linear. Dadurch wird die Ladeluftströmung nur wenig verwirbelt und der Druckabfall verringert.

In einem erfindungsgemäßen integrierten Auflademodul verläuft eine Auflademodulachse durch den Mittelpunkt des Einlass der Niederdruckladeeinrichtung und den Mittelpunkt des Auslass des Hochdruckladeluftkühlers. Diese Achse ist im Wesentlichen mit der Längsachse des Hochdruckladeluftkühlers identisch. Zusätzlich ist die Auflademodulachse im Wesentlichen parallel sowohl zur Längsachse des Zwischenkühlers als auch parallel zur Längsachse des Abgaskühlers. Daraus ergibt sich ebenfalls ein verringerter Druckverlust und des weiteren ist der erforderliche Einbauraum gegenüber einer Anordnung gemäß des Standes der Technik geringer.

In einem erfindungsgemäßen integrierten Auflademodul durchströmt die Ladeluftströmung die Druckladeeinrichtungen und die Kühler der Kühleranordnung bevorzugt in im Wesentlichen horizontaler Richtung.

Ein Kühler der Kühleranordnung und eine Druckladeeinrichtung sind in einem erfindungsgemäßen integrierten Auflademodul vorzugsweise über ein Verbindungsteil verbunden, wobei die Länge des Verbindungsteils in Strömungsrichtung vorzugsweise geringer ist als die Länge des Kühlers der Kühlanordnung. Dadurch wird eine kompakte Anordnung der Komponenten eines erfindungsgemäßen integriertes Auflademodul erreicht und die Strömungsführung der Ladeluftströmung verbessert.

Im Niederdruckverdichtergehäuse sind vorteilhaft Strömungskanäle als Zuführ-/ Abführkanäle für das Kühlmittel ausgebildet. Solche Zuführ-/ Abführkanäle können alternativ oder zusätzlich im Hochdruckverdichtergehäuse ausgebildet sein. Ihr Querschnitt ist vorzugsweise in Gestalt eines im Wesentlichen kreisrunden Querschnitts ausgebildet, es sind aber auch davon abweichende Querschnittsformen möglich. Diese Strömungskanäle lassen sich vorteilhaft an einen Kühlmittelkreis einer Klimaanlage anschließen. Die Anschlüsse für die Kühlmittelleitungen von einem Klimaanlagensystem an die Strömungskanäle in einem Druckverdichtergehäuse können somit stabiler ausgebildet werden.

Ein wesentlicher Vorteil der Erfindung besteht in der kompakten Bauweise des integrierten Auflademoduls, wobei die Anordnung der Komponenten für die mehrstufige Verdichtereinheit und der Kühleranordnung hinsichtlich der Erstreckung in Motorquerachsenrichtung verkürzt wird, was der Unterbringung von zusätzlichen Komponenten oder einen verbesserten Verlauf von Leitungen für Komponenten im Motorraum ermöglicht.

In einer Ausführungsform kann der Zwischenkühler in einem der beiden Druckverdichtergehäuse integriert oder untergebracht sein, wobei sich das Druckverdichtergehäuse von einem Einlass bzw. Auslass in einer Längsrichtung derart erstreckt, dass der Zwischenkühler darin aufgenommen werden kann.

Der Zwischenkühler und/oder der Hochdruckladeluftküh!er sind bevorzugt Rohrbündelkühler, da diese aufgrund ihrer kompakten Bauweise entlang ihLängsrichtung eine hohe Volumenleistungsdichte für die abzuführende Wärme aufweisen. Es sind aber auch andere Wärmetauscher mit einer kompakten Bauform möglich.

Bevorzugt weisen die Strömungskanäle für das Kühlmittel Ein- / Austrittsquerschnitte in einem Druckverdichtergehäuse auf, welche im Wesentlichen in einer Ebene angeordnet sein können. Die Strömungskanäle für das Kühlmittel in dem Druckverdichtergehäuse sind des weiteren bevorzugt nebeneinander angeordnet, wodurch sich vorteilhafterweise eine kompakte Anordnung der Strömungskanäle für das Druckverdichtergehäuse ergibt.

Vorteilhafterweise können aufgrund der mittelbaren Befestigung des Zwischenkühlers zwischen den Druckverdichtergehäusen Befestigungselemente entfallen. Der Wegfall der bislang erforderlichen Befestigungselemente für den Zwischenkühler am Motor sorgt vorteilhaft für eine Reduzierung des Gewichts der mehrstufigen Verdichtereinheit und der Kühleranordnung und erhöht die Flexibilität in Bezug auf die Anordnung der Kühler der Kühleranordnung im Bereich des Motors.

Bevorzugt ist wenigstens ein Strömungskanal innerhalb des Zwischenkühlergehäuses und wenigstens ein weiterer Strömungskanal außerhalb des Zwischenkühlergehäuses angeordnet. Vorteilhafterweise wird das aus dem Zwischenkühler ausströmende und von der Ladeluft erwärmte Kühlmittel in einem Strömungskanal abgeführt, welcher außerhalb des Zwischenkühiergehäuses angeordnet ist. Das außerhalb des Zwischenkühlergehäuses abgeführte Kühlmittel kann somit vorteilhaft auf dem Weg zum Klimaanlagensystem seine Wärme über die Strömungskanäle teilweise an die Umgebung abgeben und erwärmt nicht die Ladeluft.

Vorteilhafterweise kann sich eine verlustarme Ladeluftführung in den Verbindungsbereichen zwischen den Kühlern der Kühleranordnung und den Druckladeeinrichtungen ergeben. Denn zum einen muss die Ladeluft nur einen kurzen Weg in den Verbindungsbereichen zurücklegen und zum anderen muss die Ladeluft in den Verbindungsbereichen nicht umgelenkt werden, da die Ladeluft aus einem Austrittsquerschnitt in der Hauptströmungsrichtung der Ladeluft austritt.

Kurz ausgebildete Verbindungsbereiche zwischen den Kühlern der Kühleranordnung und den Druckladeeinrichtungen mit entsprechend kleinen Ladeluftvolumen sind hinsichtlich der Geräuschentwicklung der Kühler besonders vorteilhaft, da die Eigenfrequenzen des Ladeluftvolumens in den Verbindungsbereichen durch den kurzen Abstand zwischen Kühler und Druckladeeinrichtungen vorteilhaft verschoben werden.

Aus kleinen Ladeluftvolumen in den oben genannten Verbindungsbereichen resultiert des weiteren eine verkürzte Ansprechzeit des Motors auf eine gewünschte Geschwindigkeitssteigerung durch den Fahrer. Die zusätzliche Motorleistung kann dann schneller zur Verfügung gestellt werden.

Weitere Vorteile, Merkmale und Anwendungsmöglichkeiten der vorliegenden Erfindung ergeben sich aus der nachfolgenden Beschreibung in Zusammenhang mit den Figuren. Hierzu zeigt, teilweise schematisiert:
- Fig. 1: eine Seitenansicht eines integrierten Auflademoduls nach einer Ausführung der vorliegenden Erfindung,
- Fig. 2: eine Draufsicht des integrierten Auflademoduls nach Fig. 1, wobei der Abgaskühler nicht dargestellt ist.

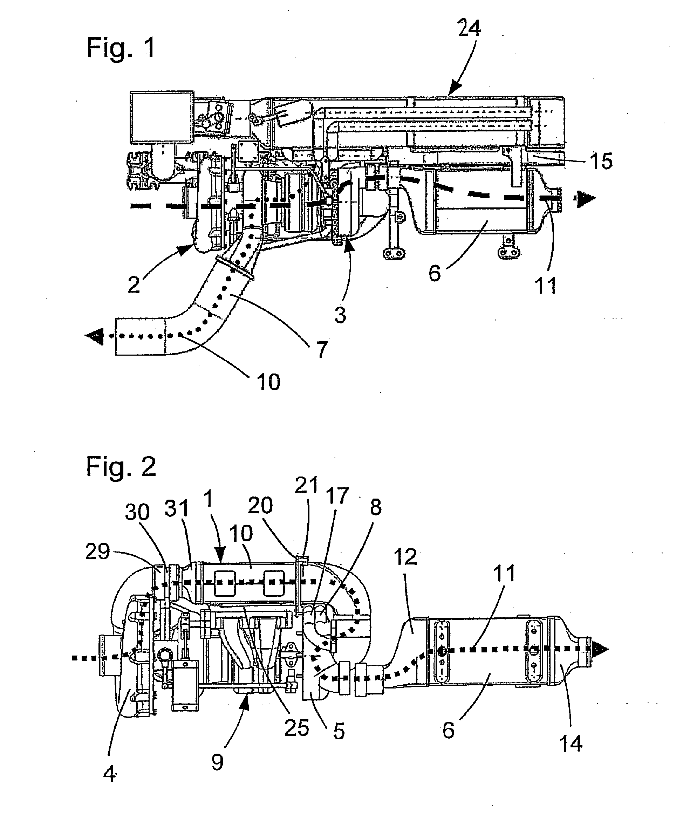

Fig. 1 zeigt eine Seitenansicht des integrierten Auflademoduls nach einer AusfGhrungsform der vorliegenden Erfindung. Eine mehrstufige Verdichtereinheit weist einen Niederdruck-Verdichter 2 mit einem Niederdruckverdichtergehäuse 4 und einen Niederdruck-Verdichterauslass, welcher sich in einen Kanal in Hauptströmungsrichtung der Ladeluft 11 erstreckt, und einen Hochdruck-Verdichter 3 mit einem Hochdruckverdichtergehäuse 5 auf. Zwischen den beiden Druckverdichtern 2, 3 ist eine Turbine 9 angeordnet. Eine Kühleranordnung umfasst einen Zwischenkühler 1, einen Hochdruckladeluftkühler 6 und / oder einen Abgaskühler 24.

Der Ladeluftmassenstrom 11 (mit unterbrochener Linien dargestellt) strömt durch die Verdichter 2, 3 und die zugehörigen Kühler 1, 6 im Wesentlichen in horizontaler Richtung. Der Mittelpunkt des Eintrittsquerschnitts des Niederdruckverdichters 2 und der Mittelpunkt des Austrittsquerschnitts des Hochdruckladeluftkühlers 6 bilden eine Linie, die im Wesentlichen horizontal verläuft.

Der Abgasmassenstrom 10 (mit gepunkteter Linie dargestellt) tritt vom Abgaskühler 24 in die Turbine 9 ein und sorgt durch das Zusammenwirken mit den Turbinenschaufeln für die Drehung einer innenliegenden Welle (nicht dargestellt). Anschließend wird dieser in tangentialer Richtung aus dem Turbinengehäuse abgeführt und mündet in einem Abgasrohr 7, welches den Abgasmassenstrom 10 in Richtung der Abgasanlage des Fahrzeugs (nicht dargestellt) führt. Der Niederdruck-Verdichter 2 und der Hochdruck-Verdichter 3 werden von der oben stehend beschriebenen Welle gemeinsam angetrieben, wobei diese sich vom Inneren der Turbine 9 aus in Richtung der Verdichter 2, 3 erstreckt.

Der Hochdruckladeluftkühler 6 weist in seinem Eintritts- und Austrittsquerschnitt einen im Wesentlichen rechteckigen Querschnitt auf. Der Eintrittsquerschnitt des Hochdruckladeluftkühlers 6 ist gegenüber dem Eintrittsquerschnitt des Verbindungsteils 12 vergrößert, um die wärmeübertragende Fläche des Gehäuses des Hochdruckladeluftkohlers 6 zu vergrößern. Die Wärmeübertragung von dem Ladeluftmassenstrom 11 erfolgt im Wesentlichen über die Oberfläche des Hochdruckladeluftkühlers 6 an einen Luftstrom, welcher dieses Gehäuse durchströmt.

Der Abgaskühler 24 ist im Wesentlichen oberhalb der Verdichter 2, 3 und oberhalb des Hochdruckladeluftkohlers 6 angeordnet. Der Hochdruckladeluftkühler 6 und der Abgaskühler 24 sind auf gegenüber liegenden Seiten einer Kühlmittelplatte 15 angeordnet und mit dieser verbunden, beispielsweise direkt oder über Streben verschraubt, verschweißt, verlötet oder verklebt. Das integrierte Auflademodul kann seinerseits als ganzes beispielsweise über Streben an einem Motor eines Kraftfahrzeugs (nicht dargestellt) befestigt sein.

Fig. 2 zeigt eine Draufsicht der mehrstufigen Verdichtereinheit mit Zwischenkühler 1 und Hochdruckladeluftkühler 6 gemäß Fig. 1. Der Abgaskühler 24 und die Abgasleitung 7 sind nicht dargestellt. Der Verlauf des Ladeluftmassenstroms 11 durch die mehrstufige Verdichtereinheit ist mit unterbrochenen Linien dargestellt. Dieser verläuft dabei im Wesentlichen auf einer Ebene, welche aus drei Punkten gebildet wird. Der erste Punkt wird durch den Mittelpunkt des Einlasses für den Niederdruckverdichter 2 gebildet. Der zweite Punkt wird durch den Mittelpunkt des Auslasses des Hochdruckladeluftkühlers 6 gebildet. Der dritte Punkt wird durch den Mittelpunkt des Einlasses des Zwischenkühlers 1 gebildet. Die kompakte Anordnung der Verdichter 2,3 und der Kühleinrichtungen 1, 6, 24 entlang der Längsachse des integrierten Auflademoduls zeigt sich in dieser Ansicht deutlich. Dasselbe gilt für die zugehörigen Verbindungsteile 12, 30, welche nur eine geringe Länge der zugehörigen Längsachse des Bauteils aufweisen. Die Strömungsführung des Ladeluftmassenstroms 11 durch die Kühleinrichtungen 1, 6 erfolgt im Wesentlichen in Hauptströmungsrichtung, ohne am jeweiligen Eintritt oder Austritt eine Umlenkung hervorzurufen.

Das Niederdruckverdichtergehäuse 4 ist über ein Verbindungsteil in Form eines Steckrohrs 30 mit einem Einlass für einen Diffusor 31 für den Zwischenkühler 1 verbunden, wobei das Steckrohr 30 als einstückiges Bauteil ausgebildet ist. Das Niederdruckverdichtergehäuse 4 weist auf einer Seite ein Anschlussrohr 29 mit einem Innendurchmesser auf, welcher im Wesentlichen mit dem Außendurchmesser des Steckrohrs 30 identisch ist, so dass das Steckrohr 30 reibschlüssig im Anschlussrohr 29 festgelegt ist. Der Diffusor 31 weist auf einer ersten Seite (im Bereich des Steckrohrs 30) einen Querschnitt auf, welcher vom Querschnitt einer zweiten Seite (im Bereich des Einlass des Zwischenkühlers 1) verschieden ist. Die erste Seite weist die Gestalt eines Kreises auf, während die zweite Seite im Wesentlichen die Gestaltung des beispielsweise rechteckigen Einlassquerschnitts für den Zwischenkühler 1 aufweist. Des weiteren weist die erste Seite einen Innendurchmesser zur Aufnahme des Steckrohrs 30 auf, welcher im Wesentlichen mit dem Außendurchmesser des Steckrohrs 30 identisch ist, so dass das Steckrohr 30 reibschlüssig im Diffusor 31 festgelegt ist. Vorteilhaft wird Ladeluft 11 im Austritt aus dem Niederdruckverdichtergehäuse 4 nicht umgelenkt.

Trotz der kompakten Bauweise sind nur wenige Umlenkungen des Ladeluftmassenstrorris 11 durch die mehrstufige Verdichtereinheit erforderlich. Auf dem Weg durch die Verdichter 2, 3 wird der Ladeluftmassenstrom jeweils homogen umgelenkt, wodurch der Druckverlust zwischen dem Eintritt und Austritt eines Verdichters 2, 3 entsprechend gering ausfällt. Das Hochdruckverdichtergehäuse 5 weist auf einer Seite je einen Strömungskanal für einen Zulauf 17 und einen Strömungskanal für einen Ablauf 8 des Kühlmittels für den Zwischenkühler 1 auf. Die Querschnitte im Endbereich dieser Strömungskanäle bilden Austritts- und Eintrittsquerschnitte und sind jeweils nebeneinander in einer Ebene angeordnet. Die Strömungskanäle 17, 8 für die Kühlmittelversorgung des Zwischenkühlers 1 sind jeweils in dem Hochdruckverdichtergehäuse 5 ausgebildet. Das Verbindungsteil 12 weist im Bereich des Eintritts einen im Wesentlichen kreisförmigen Querschnitt auf, während der Querschnitt des Verbindungsteils 12 am Austritt im Wesentlichen eine an den Querschnitt des Zwischenkühlers angepasste Gestaltung aufweist. Die Turbine 9 wird durch die Abgase aus dem Motorraum beaufschlagt und treibt die Verdichter 2, 3 an.

Der Zwischenkühler 1 ist ein Rohrbündelkühler, der einfach durchströmt ist. Der Zwischenkühler 1 weist einen Auslass mit einem zugehörigen Zwischenkühlerflansch 20 auf, welcher mit einem Hochdruckverdichterflansch 21 an einem Einlass am Hochdruckverdichtergehäuse 5 verschraubt ist. Der Zwischenkühlerflansch 20 weist von dem Kühlmittel entgegen der Hauptströmungsrichtung der Ladeluft 11 und einen anderen von verdichteter Luft aus dem Zwischenkühler 1 in Hauptströmungsrichtung 11 durchströmten Querschnitt auf. Der Zwischenkühler 1 weist eine Längsachse auf, welche im Wesentlichen in Ausströmungsrichtung der Ladeluft 11 aus dem Niederdruckverdichtergehäuse 4 verläuft.

Die Gestaltung des Zwischenkühlergehäuses 40 ist im Wesentlichen rechteckig. Auf einer Seite des Zwischenkühlergehäuses 40 erstreckt sich von dem Zwischenkühlerflansch 20 bis in einen Bereich des Einlass des Zwischenkühlers 1 entgegen der Hauptströmungsrichtung der Ladeluft 11 ein im Wesentlichen zylinderförmiger Strömungskanal 25 mit einer Außenwand, wobei dessen Längsrichtung im Wesentlichen parallel zur Hauptströmungsrichtung der Ladeluft 11 ist. In dieser Ausführungsform verläuft der Strömungskanal 25 außerhalb des Zwischenkühlergehäuses 40.

In einer nicht dargestellten Abwandlung kann der Strömungskanal 25 auch im Zwischenkühlergehäuse 40 integriert sein. Auf einer dem Zwischenkühlerflansch 20 gegenüber liegenden Seite des Strömungskanals 25 erstreckt sich ein Kühlmitteleinlass senkrecht zur Hauptströmungsrichtung der Ladeluft 11 in den Zwischenkühler 1. Der Kühlmitteleinlass weist einen im Wesentlichen kreisrunden Querschnitt auf, wobei auch beliebige andere Querschnittsformen möglich sind. Das Kühlmittel wird mit einer ersten Temperatur über einen Kühlmitteleinlass dem Zwischenkühler 1 zugeführt und erwärmt sich während des Durchströmens des Zwischenkühlers 1 entgegen der Hauptströmungsrichtung der Ladeluft 11 auf eine zweite Temperatur, welche gegenüber der ersten Temperatur erhöht ist. Das Kühlmittel tritt dann am Kühlmittelauslass aus dem Zwischenkühler 1 aus und wird über den Strömungskanal 25 an das Klimaanlagensystem zurückgeführt.

## Patentansprüche

1. Integriertes Auflademodul, welches eine Niederdruckladeeinrichtung (2) mit einem Niederdruckverdichtergehäuse (4), eine Hochdruckladeeinrichtung (3) mit einem Hochdruckverdichtergehäuse (5), eine Turbine (9) und eine Kühleranordnung mit einem Zwischenkühler (1) und einem Hochdruckladeluftkühler (6) umfasst, wobei die Niederdruckladeeinrichtung (2), die Hochdruckladeeinrichtung (3), die Turbine (9) und die Kühleranordnung eine bauliche Einheit bilden wobei eine Auflademodulachse durch einen Mittelpunkt des Einlasses der Niederdruckladeeinrichtung (2) und einen Mittelpunkt des Auslasses des Hochdruckladeluftkühlers (6) verläuft und die Auflademodulachse mit einer Längsachse des Hochdruckladeluftkühlers (6) identisch ist, **dadurch gekennzeichnet, dass**
- das Niederdruckverdichtergehäuse (4) und das Hochdruckverdichtergehäuse (5) einen axialen Einlass und einen radialen Auslass zur Führung eines Ladeluftmassenstroms (11) aufweist und der Zwischenkühler (1) zwischen der Niederdruckladeeinrichtung (2) und der Hochdruckladeeinrichtung (3) angeordnet ist und die Längsachse des Zwischenkühlers (1) im Wesentlichen zur Auflademodulachse parallel ist, wobei die Niederdruckladeeinrichtung (2), die Hochdruckladeeinrichtung (3) und die Turbine (9) eine gemeinsame Drehachse aufweisen, und
- die Kühleranordnung einen Abgaskühler (24) aufweist dessen Längsachse im Wesentlichen zur Auflademodulachse parallel ist und wobei der Abgaskühler (24) mit einem Eintritt eines Turbinengehäuses der Turbine (9) verbunden ist, das zur Führung eines Abgasmassenstroms (10) in Richtung einer Abgasanlage eines Fahrzeugs in ein Abgasrohr mündet, und wobei
- der Hochdruckladeluftkühler (6) und der Abgaskühler (24) auf gegenüberliegenden Seiten einer Kühlmittelplatte (15) angeordnet und mit der Kühlmittelplatte (15) verbunden sind, wobei die Kühlmittelplatte (15) eine Kühlmittelführung für wenigstens einen Kühler der Kühlanordnung aufweist.

2. Integriertes Auflademodul gemäß Anspruch 1, **dadurch gekennzeichnet, dass** der Zwischenkühler (1) zwischen dem Auslass des Niederdruckverdichtergehäuses (4) und dem Einlass des Hochdruckverdichtergehäuses (5) mit einem Verbindungsteil (30, 31, 20, 21) verbunden ist.

3. Integriertes Auflademodul gemäß Anspruch 1 oder 2, **dadurch gekennzeichnet, dass** die Kühler (1, 6) vom Ladeluftmassenstrom (11) in einer Hauptströmungsrichtung ohne Umlenkung am jeweiligen Eintritt oder Austritt durchströmbar sind.

4. Integriertes Auflademodul gemäß einem der vorherigen Ansprüche, **dadurch gekennzeichnet, dass** der Mittelpunkt des Einlasses der Niederdruckladeeinrichtung (2) und der Mittelpunkt des Auslasses des Hochdruckladeluftkühlers (6) eine Linie bilden, die im Wesentlichen horizontal verläuft und der Ladeluftmassenstrom (11) die Druckladeeinrichtungen (2, 3) und die Kühler (1, 6) in im Wesentlichen horizontaler Richtung durchströmt.

5. Integriertes Auflademodul gemäß einem der vorherigen Ansprüche, **dadurch gekennzeichnet, dass** der Ladeluftmassenstrom (11) die Druckladeeinrichtungen (2, 3) und die Kühler (1, 6) auf einer im Wesentlichen durch einen ersten, zweiten und dritten Punkt festgelegten Ebene durchströmt, wobei der erste Punkt durch den Mittelpunkt des Einlasses der Niederdruckladeeinrichtung (2), der zweite Punkt durch den Mittelpunkt des Auslasses des Hochdruckladeluftkühlers (6) und der dritte Punkt durch den Mittelpunkt des Einlasses des Zwischenkühlers (1) gebildet ist.

6. Integriertes Auflademodul gemäß einem der vorherigen Ansprüche, da **gekennzeichnet durch** eine von dem Ladeluftmassenstrom (11) separate Führung des Abgasmassenstroms (10).

7. Integriertes Auflademodul gemäß einem der vorherigen Ansprüche, **dadurch gekennzeichnet, dass** die Turbine (9) direkt oder über ein Verbindungsteil mit dem Abgaskühler (24) verbunden ist und/oder
die Niederdruckverdichtereinrichtung (2) direkt oder über ein Verbindungsteil (30) mit dem Zwischenkühler (1) verbunden ist und/oder die Hochdruckverdichtereinrichtung (3) direkt oder über ein Verbindungsteil (12) mit dem Hochdruckladeluftkühler (6) verbunden ist.

8. Integriertes Auflademodul gemäß einem der vorherigen Ansprüche, **dadurch gekennzeichnet, dass** ein Verbindungsteil (20, 21, 30, 31) ausgewählt ist aus der Grunde bestehend aus: Steckrohr (30), Diffusor (31), Zwischenkühlerflansch (20), Hochdruckverdichterflansch (21), Flansch.

9. Integriertes Auflademodul gemäß Anspruch 8 **dadurch gekennzeichnet, dass** der Flansch, insbesondere Zwischenkühlerflansch (20), einen von Kühlmittel entgegen einer Hauptströmungsrichtung eines Ladeluftmassenstroms (11) durchströmten Querschnitt und einem anderen vom Ladeluftmassenstrom (11) in der Hauptstromrichtung desselben durchströmten Querschnitt aufweist.

10. Integriertes Auflademodul gemäß Anspruch 8 oder 9 **dadurch gekennzeichnet ist, dass** sich auf einer Seite eines Zwischenkühlergehäuses (40) von dem Zwischenkühlerflansch (20) bis in einen Bereich eines Einlassens des Zwischenkühlergehäuses (40) ein Strömungskanal (25) für Kühlmittel im Wesentlichen parallel zu einer Hauptströmungsrichtung eines Ladeluftmassenstroms (11) erstreckt, über den Kühlmittel an ein Klimaanlagensystem rückführbar ist.

11. Integriertes Auflademodul gemäß einem der vorhergehenden Ansprüche, **dadurch gekennzeichnet, dass** der Zwischenkühler (1), der Hochdruckladeluftkohler (6) und/oder der Abgaskühler (24) mit einem Kühlmittelkreis eines Klimaanlagensystems verbunden sind.

12. Integriertes Auflademodul gemäß einem der vorherigen Ansprüche, **dadurch gekennzeichnet, dass** der Zwischenkühler (1) ein im wesentlichen rechteckiges Gehäuse hat.

13. Integriertes Auflademodul gemäß einem der vorherigen Ansprüche, **dadurch gekennzeichnet, dass** ein Kühler (1, 6) und eine Druckladeeinrichtung (2, 3) über ein Verbindungsteil (12, 30) verbunden sind, wobei die Länge des Verbindungsteils (12, 30) in Strömungsrichtung geringer ist als die Länge des Kühlers (1, 6).

14. Integriertes Auflademodul gemäß einem der vorherigen Ansprüche, **dadurch gekennzeichnet, dass** im Niederdruckverdichtergehäuse (4) und/oder im Hochdruckverdichtergehäuse (5) Strömungskanäle für ein Kühlmittel ausgebildet sind.

15. Integriertes Auflademodul gemäß einem der vorherigen Ansprüche, **dadurch gekennzeichnet, dass** der Zwischenkühler (1) und/oder der Hochdruckladeluftkühler (6) einen Rohrbündelkühler umfasst.

## Claims

1. Integrated supercharger module, comprising a low-pressure charging device (2) having a low-pressure compressor housing (4), a high-pressure charging device (3) having a high-pressure compressor housing (5), a turbine (9) and a cooler arrangement having an intercooler (1) and a high-pressure charge air cooler (6), the low-pressure charging device (2), the high-pressure charging device (3), the turbine (9) and the cooler arrangement forming a structural unit, a supercharger module axis extending through a center of the inlet of the low-pressure charging device (2) and a center of the outlet of the high-pressure charge air cooler (6), and the supercharger module axis being identical to a longitudinal axis of the high-pressure charge air cooler (6), **characterized in that**
- the low-pressure compressor housing (4) and the high-pressure compressor housing (5) each comprise an axial inlet and a radial outlet for guiding a charge air flow (11), and the intercooler (1) is disposed between the low-pressure charging device (2) and the high-pressure charging device (3), and the longitudinal axis of the intercooler (1) is substantially parallel to the supercharger module axis, wherein the low-pressure charging device (2), the high-pressure charging device (3) and the turbine (9) have a common axis of rotation, and
- the cooler arrangement comprises an exhaust gas cooler (24), the longitudinal axis of which is substantially parallel to the supercharger module axis, wherein the exhaust gas cooler (24) is connected to an entry of a turbine housing of the turbine (9), which opens into an exhaust gas pipe for guiding an exhaust gas flow (10) in the direction of an exhaust gas system of a vehicle, and wherein
- the high-pressure charge air cooler (6) and the exhaust gas cooler (24) are disposed of opposite sides of a coolant plate (15) and are connected to the coolant plate (15), wherein the coolant plate (15) has a coolant conduit for at least one cooler of the cooling arrangement.

2. The integrated supercharger module according to claim 1, **characterised in that** the intercooler (1) is connected to a connecting part (30, 31, 20, 21) between the outlet of the low-pressure compressor housing (4) and the inlet of the high-pressure compressor housing (5).

3. The integrated supercharger module according to claim 1 or 2, **characterized in that** the charge air flow (11) can flow through the coolers (1, 6) in a main flow direction without deflection at the respective entry or exit.

4. An integrated supercharger module according to any of the preceding claims, **characterised in that** the center of the inlet of the low-pressure charging device (2) and the center of the outlet of the high-pressure charge air cooler (6) form a line which is substantially horizontal, and the charge air flow (11) flows through the charging devices (2, 3) and the coolers (1, 6) substantially in the horizontal direction.

5. An integrated supercharger module according to any of the preceding claims, **characterised in that** the charge air flow (11) flows through the charging devices (2, 3) and the coolers (1, 6) on a plane that is substantially fixed by a first, a second and a third point, wherein the first point is formed by the center of the inlet of the low-pressure charging device (2), the second point is formed by the center of the outlet of the high-pressure charge air cooler (6) and the third point is formed by the center of the inlet of the intercooler (1).

6. An integrated supercharger module according to any of the preceding claims, **characterised by** guidance of the exhaust gas flow (10) that is separate from the charge air flow (11).

7. An integrated supercharger module according to any of the preceding claims, **characterised in that** the turbine (9) is connected to the exhaust gas cooler (24) directly or via a connecting part and/or
the low-pressure compressor device (2) is connected to the intercooler (1) directly or via a connecting part (30) and/or the high-pressure compressor device (3) is connected to the high-pressure charge air cooler (6) directly or via a connecting part (12).

8. An integrated supercharger module according to any of the preceding claims, **characterised in that** a connecting part (20, 21, 30, 31) is selected from the group consisting of: plain conduit (30), diffuser (31), intercooler flange (20), high-pressure compressor flange (21), and flange.

9. The integrated supercharger module according to claim 8, **characterised in that** the flange, in particular the intercooler flange (20), has a cross-section through which coolant flows counter to a main flow direction of a charge air flow (11) and a cross-section through which the charge air flow (11) flows in the main flow direction.

10. The integrated supercharger module according to claim 8 or 9, **characterised in that** a flow channel (25) for coolant extends substantially parallel to a main flow direction of the charge air flow (11) on one side of an intercooler housing (40) the intercooler flange (20) into a region of an inlet of the intercooler housing (40), wherein coolant can be recirculated via the flow channel to an air-conditioning system.

11. An integrated supercharger module according to any of the preceding claims **characterised in that** the intercooler (1), the high-pressure air charge cooler (6) and/or the exhaust gas cooler (24) are connected to a coolant circuit of an air-conditioning system.

12. An integrated supercharger module according to any of the preceding claims, **characterised in that** the intercooler (1) has a substantially rectangular housing.

13. An integrated supercharger module according to any of the preceding claims, **characterised in that** a cooler (1, 6) and a pressure charging device (2, 3) are connected via a connecting part (12, 13), wherein the length of the connecting part (12, 13) in the flow direction is less than the length of the cooler (1, 6).

14. An integrated supercharger module according to any of the preceding claims, **characterised in that** flow channels for a coolant are constructed in the low-pressure compressor housing (4) and/or in the high-pressure compressor housing (5).

15. An integrated supercharger module according to any of the preceding claims, **characterised in that** the intercooler (1) and/or the high-pressure charge air cooler (6) comprises a shell-and-tube cooler.

## Revendications

1. Module de suralimentation intégré qui comprend un dispositif de suralimentation à basse pression (2) comportant un carter de compresseur à basse pression (4), un dispositif de suralimentation à haute pression (3) comportant un carter de compresseur à haute pression (5), une turbine (9) et un agencement de refroidisseurs comportant un refroidisseur intermédiaire (1) et un refroidisseur d'air de suralimentation à haute pression (6), ou le dispositif de suralimentation à basse pression (2), le dispositif de suralimentation à haute pression (3), la turbine (9) et l'agencement de refroidisseurs forment un ensemble unitaire, où un axe du module de suralimentation passe par un centre de l'entrée du dispositif de suralimentation à basse pression (2) et par un centre de la sortie du refroidisseur d'air de suralimentation à haute pression (6), et l'axe du module de suralimentation est identique à un axe longitudinal du refroidisseur d'air de suralimentation à haute pression (6),
**caractérise en ce que**
- le carter de compresseur à basse pression (4) et le carter de compresseur à haute pression (5) présentent une entrée axiale et une sortie radiale servant au guidage d'un flux massique d'air de suralimentation (11), et le refroidisseur intermédiaire (1) est disposé entre le dispositif de suralimentation à basse pression (2) et le dispositif de suralimentation à haute pression (3), et l'axe longitudinal du refroidisseur intermédiaire (1) est pratiquement parallèle à l'axe du module de suralimentation, où le dispositif de suralimentation à basse pression (2), le dispositif de suralimentation à haute pression (3) est la turbine (9) présentent un axe de rotation commun, et
- l'agencement de refroidisseurs présente un refroidisseur de gaz d'échappement (24) dont l'axe longitudinal est pratiquement parallèle à l'axe du module de suralimentation, et où le refroidisseur de gaz d'échappement (24) est raccordé à une entrée d'un carter de turbine, ici de la turbine (9), lequel carter, pour le guidage d'un flux massique de gaz d'échappement (10) en direction d'un système d'échappement d'un véhicule, débouche dans un tuyau d'échappement, et où
- le refroidisseur d'air de suralimentation à haute pression (6) et le refroidisseur de gaz d'échappement (24) sont disposés sur des côtés opposés d'une plaque de liquide de refroidissement (15) et raccordés à la plaque de liquide de refroidissement (15), où la plaque de liquide de refroidissement (15) présente un guidage du liquide de refroidissement pour au moins un refroidisseur du dispositif de refroidissement.

2. Module de suralimentation intégré selon la revendication 1, **caractérisé en ce que** le refroidisseur intermédiaire (1) est raccordé à une pièce de jonction (30, 31, 20, 21) placée entre la sortie du carter de compresseur à basse pression (4) et l'entrée du carter de compresseur à haute pression (5).

3. Module de suralimentation intégré selon la revendication 1 ou 2, **caractérisé en ce que** les refroidisseurs (1, 6) peuvent être traversée par le flux massique d'air de suralimentation (11) suivant une direction principale d'écoulement, sans déviation au niveau de l'entrée ou de la sortie respective.

4. Module de suralimentation intégré selon l'une quelconque des revendications précédentes, **caractérisé en ce que** le centre de l'entrée du dispositif de suralimentation à basse pression (2) et le centre de la sortie du refroidisseur d'air de suralimentation à haute pression (6) forment une ligne qui s'étend pratiquement de façon horizontale, et le flux massique d'air de suralimentation (11) traverse les dispositifs de suralimentation sous pression (2, 3) et les refroidisseurs (1, 6), suivant une direction pratiquement horizontale.

5. Module de suralimentation intégré selon une quelconque des revendications précédentes, **caractérisé en ce que** le flux massique d'air de suralimentation (11) traverse les dispositifs de suralimentation sous pression (2, 3) et les refroidisseurs (1, 6), dans un plan déterminé essentiellement par un premier un deuxième et un troisième point, où le premier point est formé par le centre de l'entrée du dispositif de suralimentation à basse pression (2), le deuxième point par le centre de la sortie du refroidisseur d'air de suralimentation à haute pression (6) et le troisième point par le centre de l'entrée du refroidisseur intermédiaire (1).

6. Module de suralimentation intégré selon l'une quelconque des revendications précédentes, **caractérisé par** un guidage du flux massique, de gaz d'échappement (10), séparé du flux massique d'air de suralimentation (11).

7. Module de suralimentation intégré selon l'une quelconque des revendications précédentes, **caractérisé en ce que** la turbine (9) est raccordée au refroidisseur de gaz d'échappement (24), directement ou par une pièce de jonction, et / ou le dispositif de compresseur à basse pression (2) est raccordé au refroidisseur intermédiaire (1), directement ou par une pièce de jonction (30), et / ou le dispositif de compresseur à haute pression (3) est raccordé au refroidisseur d'air de suralimentation à haute pression (6), directement ou par une pièce de jonction (12).

8. Module de suralimentation intégré selon l'une quelconque des revendications précédentes, **caractérisé en ce qu'**une pièce de jonction (20, 21, 30, 31) est choisie parmi celles composant un tuyau d'insertion (30) un diffuser (31), une bride de refroidisseur intermédiaire (20), une bride de compresseur à haute pression (21), une bride.

9. Module de suralimentation intégré selon la revendication 8, **caractérisé en ce que** la bride, en particulier la bride de refroidisseur intermédiaire (20), présente une section traversée par le liquide de refroidissement, en sens inverse par rapport à une direction principale d'écoulement d'un flux massique d'air de suralimentation (11), et une autre section traversée par le flux massique d'air de suralimentation (11), suivant la direction principale d'écoulement de ce même flux massique d'air de suralimentation.

10. Module de suralimentation intégré selon la revendication 8 ou 9, **caractérisé en ce que**, sur un côté d'un carter de refroidisseur intermédiaire (40) allant de la bride de refroidisseur intermédiaire (20) jusqu'à une zone d'entrée du carter de refroidisseur intermédiaire (40), un conduit d'écoulement (25) prévu pour le liquide de refroidissement s'étend pratiquement de façon parallèle à une direction principale d'écoulement d'un flux massique d'air de suralimentation (11), conduit d'écoulement par lequel du liquide de refroidissement peut être réintroduit dans un système de climatisation.

11. Module de suralimentation intégré selon l'une quelconque des revendications précédentes, **caractérisé en ce que** le refroidisseur intermédiaire (1), le refroidisseur d'air de suralimentation à haute pression (6) et / ou le refroidisseur de gaz d'échappement (24) sont raccordés à une circuit de liquide de refroidissement d'un système de climatisation.

12. Module de suralimentation intégré selon l'une quelconque des revendication précédentes, **caractérisé en ce que** le refroidisseur intermédiaire (1) a un carter pratiquement rectangulaire.

13. Module de suralimentation intégré selon l'une quelconque des revendications précédentes, **caractérisé en ce qu'**un refroidisseur (1, 6) et un dispositif de suralimentation sous pression (2, 3) sont raccordés par une pièce de jonction (12, 30), où la longueur de la pièce de jonction (12, 30), dans la direction d'écoulement, est plus faible que à longueur du refroidisseur (1, 6).

14. Module de suralimentation intégré selon l'une quelconque des revendications précédentes, **caractérisé en** de que des conduits d'écoulement pour un liquide de refroidissement sont configurés dans le carter de compresseur à basse pression (4) et / ou dans le carter de compresseur à haute pression (5).

15. Module de suralimentation intégré selon l'une quelconque des revendications précédentes, **caractérisé en ce que** le refroidisseur intermédiaire (1) et / ou le refroidisseur d'air de suralimentation à haute pression (6) comprend un refroidisseur à faisceaux de tubes.
